# EUROPEAN PATENT APPLICATION

(11) **EP 4 227 851 A1**
(43) Date of publication of application: **16.08.2023**
(21) Application number: 22155807.5
(22) Date of filing: 09.02.2022
(51) Int. Cl.: G06F 40/30

(54) **CREATIVE WRITING ASSISTANCE**

(71) Applicant: BIC Violex Single Member S.A., 14569 Anoixi (GR)
(72) Inventor: Kokozidis, Michail, 145 69 Anoixi (GR)
(74) Representative: Peterreins Schley

(57) **Abstract**

A computer-implemented method for providing a creativity enhancing measure to a user to enhance a creativity level of a textual user input created by the user is provided. The method comprises receiving a digitized textual representation representing the textual user input. A creativity level of the textual user input is determined by applying one or more algorithms including semantic analysis to the digitized textual representation. If the creativity level of the textual user input is below a minimum creativity threshold level, a creativity enhancing measure is generated. In aspects, textual user input may encompass one or more letters, one or more words, one or more phrases and/or one or more sentences. Specifically, the textual user input may be created by the user using a writing instrument.

## Description

### Technical Field

The present disclosure relates to a computer-implemented method for providing a creativity enhancing measure to a user to enhance a creativity level of a textual user input created by the user. The present disclosure further relates to systems configured to perform such computer-implemented methods.

### Background

Writing texts mostly requires at least to some degree a certain level of creativity. Most creations of humans, for instance a work of art, a theory, a research proposal, or any other artifact created by humans may be assigned a certain level of creativity. A well-known approach to measure creativity is the Consensual Assessment Technique (CAT). CAT is based on the idea that the best measure of the creativity of a creation is the combined assessment of recognized expert judges in the specific field of the creation. The judges are asked to rate the creativity of the creation, and an overall creativity rating is established based on collected views of judges.

A writer can fall in low creativity periods which may sometimes happen unknowingly. Post correction afterwards can be very time consuming and difficult as the writer needs to re-enter the mentality of each specific part of a written document, in order to assess and possibly correct it. However, to be able to correct an uncreative passage, the writer in the first instance must be able to detect low creativity state and will still rely on his own judgment. Having the creativity of the written document rated by CAT, requires a time consuming and costly process. In addition, only a minority of writers have access to CAT in short time intervals. Thus, even if a writer can rely on a CAT creativity check, in case of low creativity passages, the writer is still required to perform time consuming and laborious post correction. Furthermore, CAT remains a subjective creativity assessment method.

The object of the present disclosure is to provide a computer-implemented method and system which allow a user to efficiently complete a textual creation having at least a minimum creativity level.

### Summary

The present disclosure relates to a computer-implemented method as defined in claim 1, a processing device as defined in claim 11, a computer program and a computer-readable storage according to claims 13 and 14, as well as a writing system as defined in claim 15. The dependent claims describe embodiments of the present disclosure.

A computer-implemented method for providing a creativity enhancing measure to a user to enhance a creativity level of a textual user input created by the user is provided. The method comprises receiving a digitized textual representation representing the textual user input. A creativity level of the textual user input is determined by applying one or more algorithms including semantic analysis to the digitized textual representation. If the creativity level of the textual user input is below a minimum creativity threshold level, a creativity enhancing measure is generated. In aspects, textual user input may encompass one or more letters, one or more words, one or more phrases and/or one or more sentences. In an example, the textual user input may be created by the user using a writing instrument.

In aspects, the method may be performed in real-time. In an example, one or more or all method steps may be performed in real-time.

In aspects, determining the creativity level may comprise applying a natural language processing algorithm. The natural language processing algorithm may be configured to analyse the digitized textual representation. The natural language processing algorithm may be configured to extract context information of the textual user input. In aspects, context information may comprise for instance a context link. In an example, a context link may include a specific theme or concept under which the analysed text (i.e. textual user input) or sub-portion of the analysed text can be subsumed.

In aspects, the digitized textual representation may be analysed on word, phrase, sentence and/or concept level. In detail, context information may be extracted on one or more of the respective levels. In an example, the analysis may be performed on a sentence level. Context information may be extracted on a word basis. By extracting context information on a word basis the semantic relatedness of the words within one sentence may be correlated. Based on the semantic relatedness the creativity level of the analysed sentence may be subsequently determined.

In aspects, determining the creativity level may comprise applying a semantic distance algorithm. The semantic distance algorithm may be configured to quantify a semantic relatedness of the textual user input based on the context information. In some aspects, semantic distances between textual elements, e.g. words, phrases and/or sentences within the textual user input may be compared with each other. In aspects, additionally or alternatively, semantic distances between textual elements, e.g. words, phrases and/or sentences within the textual user input may compared with textual elements, e.g. words, phrases and/or sentences of previously received and/or stored textual user input.

In aspects, the semantic relatedness may be quantified by assigning one or more similarity values to the digitized textual representation of the textual user input or one or more sub-portions of the textual user-input. In aspects, the similarity value may be higher, the closer the context information is and vice versa.

In aspects, the creativity level of the textual user input may be determined by the semantic distance algorithm by assigning a scoring to the digitized textual representation based on the quantified semantic relatedness. A scoring may be assigned to the digitized textual representation which is inverse to the quantified semantic relatedness. In aspects, the creativity level may be scored in a predetermined scale. In some aspects, the predetermined scale may be pre-selected by the user via a user interface. In aspects, the predetermined scale may be a default scale. In some aspects, the predetermined scale, for instance the default scale, may be adaptable by a user. In some aspects, the predetermined scale and/or default scale may be retrieved from a database.

In aspects, the minimum creativity threshold level may be pre-selected by a user via a user interface. In aspects, the minimum creativity threshold level may be predetermined by default. In aspects, the minimum creativity threshold level may be adaptively refined by a user during writing and/or during the method.

In aspects, generating the creativity enhancing measure may comprise generating a text proposal. In aspects, generating the creativity enhancing measure may comprise generating a boost proposal. In aspects, generating the creativity enhancing measure may comprise generating a text proposal and generating a boost proposal.

In aspects, generating a text proposal may include applying a generative algorithm configured to analyse the digitized textual representation. The generative algorithm may be further configured to create a rephrased digitized textual representation which has a higher creativity level than the digitized textual representation representing the textual user input. In some aspects, the generative algorithm may include Artificial Intelligence technology. In aspects, creating the rephrased digitized textual representation may involve applying a text-based artificial intelligence algorithm and/or retrieving rephrasing data stored on a database. Rephrasing data may be based on creative writing course material and/or may be previously created by a user or a generative algorithm. In aspects, creating the rephrased digitized textual representation may involve applying a semantic distance algorithm and a natural language processing algorithm.

In aspects, the rephrased digitized textual representation may be stored on a database.

In aspects, generating a boost proposal may include choosing a creativity stimulating activity from a list of creativity stimulating activities stored on a database. In aspects, the list of creativity stimulating activities may include one or more of a writing brake proposal and/or a creativity stimulating exercise. In aspects, the list of creativity stimulating activities may be adapted by the user and/or updated.

In some aspects, the creativity stimulating activity may be chosen randomly from the list of creativity stimulating activities. In some aspects, the creativity stimulating activity may be chosen from the list of creativity stimulating activities based on one or more user preferences.

In some aspects, the creativity stimulating activity may be chosen from the list of creativity stimulating activities based on a predetermined effectiveness in leading to a higher subsequent creativity level of textual user input. In aspects, the predetermined effectiveness may be identified by tracking the creativity levels of the textual user inputs which are created after a respective creativity stimulating activity is chosen. The chosen creativity stimulating activities may be ranked in dependence of the subsequently tracked creativity level of textual user input. This ranking may represent the predetermined effectiveness. In aspects, a default ranking and/or a default predetermined effectiveness of a creativity stimulating activity may be user, for instance stored on a database and/or downloaded from the internet. In some aspects, the default ranking and/or the default predetermined effectiveness may then be refined, for instance user-specifically and/or user-independently. In aspects, the ranking of stimulating activity effectiveness and/or the predetermined effectiveness of a creativity stimulating activity may be stored on a database. In aspects, the predetermined effectiveness may be identified user-specific. In some aspects, the predetermined effectiveness may be identified independently of specific user, for example over all users. In aspects, the creativity levels may be continuously tracked and/or stored on a database. In some aspects, the ranking of a chosen creativity stimulating activity may be continuously updated, for instance based on the continuous tracking of creativity levels.

In aspects, a text proposal may be generated if a text proposal mode is activated. In aspects, a boost proposal may be generated if a boost proposal mode is activated. In some aspects, a text proposal and a boost proposal may be generated if both a text proposal mode and a boost proposal mode are activated.

In aspects, a type of creativity enhancing measure may be pre-selected by a user via a user interface.

In aspects, a text proposal and/or a boost proposal may be generated based on a pre-selection by a user via a user interface. In some aspects, a text proposal mode may be activated if a user makes a corresponding pre-selection. In some aspects, a boost proposal mode may be activated if a user makes a corresponding pre-selection.

In aspects, a creativity enhancing measure may only be created if the creativity level is below the minimum creativity threshold level for a predetermined duration. In aspects, the predetermined duration may be determined by a predetermined time period of textual user inputs which have creativity levels below the minimum creativity level threshold. In aspects, the predetermined duration may be determined by a predetermined number of textual user inputs which have creativity levels below the minimum creativity level threshold. In some aspects, the predetermined duration may be determined by a predetermined time period and by a predetermined number of textual user inputs which have creativity levels below the minimum creativity level threshold. In aspects, the predetermined number of textual user inputs may be a predetermined number of words, phrases and/or sentences. Specifically, the predetermined number of textual user inputs may be a series of a predetermined number of low scoring sentences. In aspects, the predetermined duration may be pre-selected by a user via a user interface. Specifically, a predetermined time period and/or a predetermined number of textual user inputs, for instance, a number of phrase and/or sentences, may be pre-selected by a user via a user interface. In some aspects, the predetermined duration may be pre-selected by default. In some aspects, if the predetermined duration is pre-selected by default, the predetermined duration may be adaptable by a user.

In aspects, the method may further comprise providing a creativity warning to a user via a user interface. The creativity warning may be provided to the user upon determining that the creativity level of the textual user input is below the minimum creativity threshold level. In some aspects, the creativity warning may include an inquiry about which type of creativity enhancing measure is desired by a user. In some aspects, a text proposal and/or a boost proposal may be generated based on a selection by a user via a user interface in reply to the creativity warning, for instance in reply to the inquiry.

In aspects, the digitized textual representation may be received by retrieving it from a database. Specifically, new digitized textual representation may be retrieved as soon as it is stored on the database.

In aspects, the digitized textual representation may be received by converting it from textual user input received via a user interface. Specifically, the digitized textual representation may be received by converting textual user input to corresponding digitized textual representation as soon as textual user input is received via the user interface. In aspects, the digitized textual representation may be stored on database, for instance after having it converted from textual user input.

In aspects, the method may further comprise tracking the textual user input created by a user via a user interface. Specifically, method may comprise real-time tracking of the textual user input created by a user via a user interface. In aspects, the method may further comprise generating a digital representation of the tracked textual user input, thus the textual digitized textual representation.

In aspects, the method may further comprise providing the creativity enhancing measure visually and/or audibly via a user interface. In aspects, the method may further comprise converting the creativity enhancing measure into one or more formats which can be outputted visually and/or audibly via the user interface.

The present disclosure further relates to a processing device for carrying out the method of any one of the previously described aspects. Specifically, the processing device may be suited for providing a creativity enhancing measure to a user to enhance a creativity level of a textual user input created by the user. The processing device comprises a user interface or communications module for communicating with a user interface of a writing instrument to receive input from a user and/or to provide output to a user. In further examples, other ways of communicating with a user interface of the writing instrument may be foreseen. In examples, the processing device may comprise means for carrying out the method of any one of the previously described aspects. In general, the processing device may be understood, for instance, as a data processing device or a computing device. The processing device may generally comprise means known to the skilled person to carry out the computer-implemented method disclosed herein. For instance, the processing device comprises one or more processors and a data storage and/or access to a database for storing, for example the settings such as text mode, boost mode, minimum creativity level threshold. In aspects the user interface may comprise a user input interface and/or a user output interface. Specifically, the textual user input may be created by the user using a writing instrument.

In aspects, the communications module may comprise a wired and/or a wireless communications module. The communications module may be configured to establish a wired or wireless data connection. Specifically, the communications module may be configured to establish a wired or wireless data connection to the writing device and or to the internet. In examples, the processing device may comprise other means for communicating with the user interface of the writing instrument.

In aspects, the processing device may further comprise a database, and a processing subunit. The processing subunit may be configured to run one or more algorithms. In aspects, the processing subunit may comprise one or more of an intervention choice unit, a creativity determination unit and/or a creativity enhancing unit. The intervention choice unit, the creativity determination unit and the creativity enhancing unit may be provided in one physical unit or in two or more physically separate units. In aspects, the intervention choice unit may be configured to receive and process user preferences regarding the creativity enhancement method. For instance, user preference may comprise one or more of general settings (for instance, updates or personalisation settings), intervention mode (for instance boost mode and/or text mode and/or warning), creativity enhancing measures (for instance, list of creativity enhancing measures and/or predetermined effectiveness,) predetermined duration, minimum creativity level threshold, scale of creativity levels and/or type of user output provision (e.g. visually and/or audibly). The intervention choice unit may receive input via a user interface. In aspects, the creativity determination unit may be configured to run a natural language processing algorithm and/or a semantic distance algorithm. In aspects, the creativity enhancing unit may be configured to run a generative algorithm which, for instance may be configured to create a rephrased digitized textual representation which has a higher creativity level than the digitized textual representation representing the textual user input.

In aspects, the database may store one or more of the digitized textual representation, the creativity stimulating activities and/or their predetermined effectiveness and/or their ranking, the rephrased digitized textual representation, the minimum creativity threshold level and/or the predetermined scale.

In aspects, the processing subunit may be configured to convert the creativity enhancing measure into one or more formats which can be outputted visually and/or audibly via the user interface.

The present disclosure further relates to a computer program. The computer program comprises instructions. When the program is executed by the processing device of any one of previous aspects, the instructions cause the processing device to carry out the method steps of the computer-implemented method for providing a creativity enhancing measure to a user to enhance a creativity level of a textual user input created by the user as described in any one of the previous aspects.

The present disclosure further relates to a computer-readable storage medium having stored thereon the computer program of the previous aspect.

The present disclosure further relates to a writing system for providing a creativity enhancing measure to a user to enhance a creativity level of a textual user input created by the user. The writing system comprises the processing device of any one of the previous aspects. The writing system further comprises a writing instrument. The writing instrument comprises a user interface configured to track a textual user input created by a user of the system.

In aspects, the user interface of the writing instrument may comprise a user input interface configured to track the textual user input by capturing a textual creation of the user. In aspects, the user input interface may comprise a capturing subsystem. The capturing subsystem may be configured to capture text created by the user. In aspects, the text may be created by the user by writing with the hand and/or a pen and/or by dictating text.

In aspects, user input interface, specifically the capturing subsystem, may comprise one or more sensors. The one or more sensors may be configured to detect motion and/or force and/or sound. In aspects, the one or more sensors may comprise one or more of an accelerometer, a gyroscope, a magnetometer, an optical motion sensor, a position sensor, a microphone, a force sensor, a camera and/or a user-oriented sensor, specifically an eye tracking sensor.

In aspects, user input interface, specifically the capturing subsystem, may comprise one or more of a keyboard, a virtual keyboard, a touchpad, a touch screen, a graphics tablet, and a camera.

In aspects, the writing system may comprise a digitization subunit configured to convert the textual user input into a digitized textual representation. In some aspects, the digitization subunit may be configured to convert the textual user input into a digitized textual representation in real-time.

In aspects, the writing instrument may be a smart writing instrument, specifically a smart pen. In some aspects, the writing instrument may encompass speech recognition systems and/or gesture recognition systems. In some aspects, the writing instrument may not encompass speech recognition and/or gesture recognition. In aspects, the smart pen may integratively comprise means for tracking the textual user input and for converting it into a digitized textual representation. In examples, the means for tracking the textual user input may be understood as comprising a suited capturing subunit to track the textual user input (e.g. writing). In examples, the means for converting the textual user input into a digitized textual representation may be understood as comprising a suited digitization subunit to convert the textual user input into machine-readable, specifically computer-readable data.

In aspects, the writing system may further comprise a user output interface. The user output interface may be configured to provide user output visually and/or audibly. In aspects, the user output interface may comprise one or more of a speaker, a display, a vibration generator, and a projector. In aspects, the user output interface may be provided in one of the writing instrument or the processing device. In aspects, the writing system may comprise two user output interfaces, for instance a first user output interface and a second user output interface. In some aspects, the first user output interface may be provided in the writing instrument. The second user output interface may be provided in the processing device.

In aspects, the writing instrument may comprise a communications module. The communications module may comprise a wired and/or a wireless communications module. The communications module may be configured for communication with the processing device.

In aspects, the processing device may be integrated into the writing instrument.

In aspects, the processing device may be a separate device. In other words, the processing device may a device separate from the writing instrument.

In aspects, one or more common user interfaces may be provided for both the processing device and the writing instrument.

In aspects, one or more user interfaces may be provided for each of the processing device and the writing instrument.

In aspects, the writing system may further comprise an intervention choice unit which is configured to receive and process user preferences on intervention and/or settings of creativity enhancing measure via the user interface.

### Description of the Drawings

Other characteristics will be apparent from the accompanying drawings, which form a part of this disclosure. The drawings are intended to further explain the present disclosure and to enable a person skilled in the art to practice it. However, the drawings are intended as nonlimiting examples.
- **FIG. 1**: shows a schematic diagram of the writing system;
- **FIG. 2**: shows a highly schematic illustration of a first example configuration of the writing system having the processing device included in the writing instrument;
- **FIG. 3**: shows a highly schematic illustration of a second example configuration of the writing system having a processing device separate from the writing device;
- **FIG. 4**: shows basic method steps of the computer-implemented method;
- **FIG. 5**: shows the basic principles of an example process flow chart according to the present disclosure.

### Detailed Description

Embodiments of the computer-implemented methods and systems according to the disclosure will be described with reference to the figures as follows.

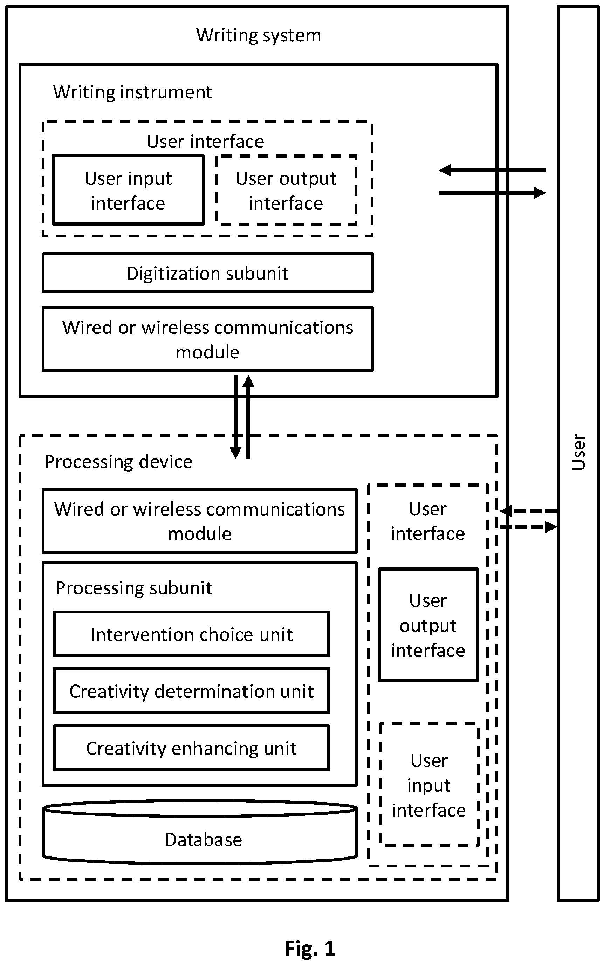

With respect to **Figs. 1 to 3** the writing system which is configured to carry out the computer-implemented method according to the present disclosure will be explained.

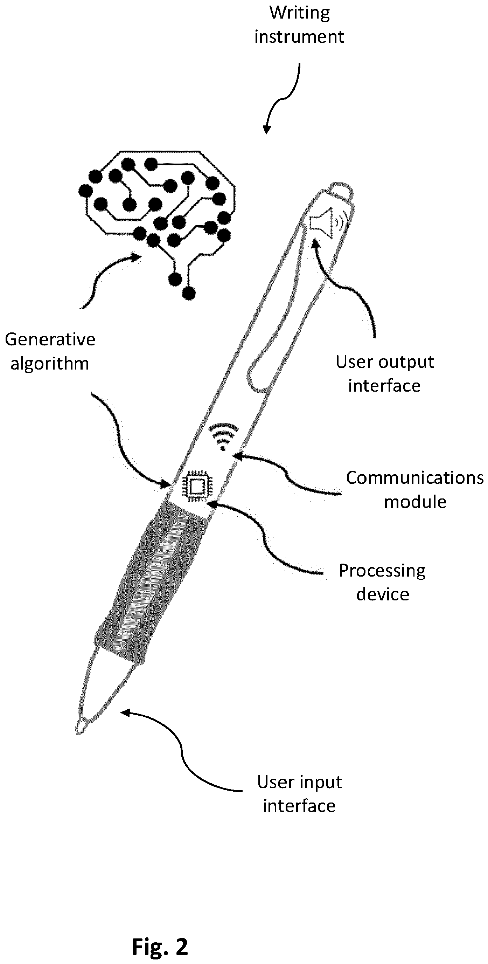

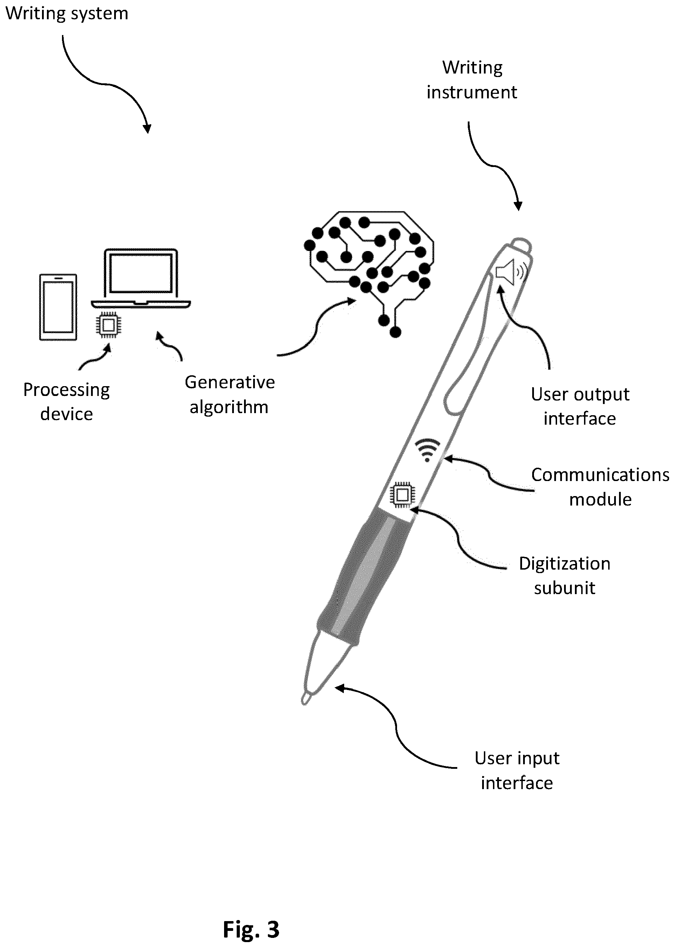

**Fig. 1** is a schematic diagram of a writing system for providing a creativity enhancing measure to a user to enhance a creativity level of a textual user input created by the user. The writing system comprises a processing device and a writing instrument. In the example configuration of **Fig. 3**, the processing device is a separate device. In other words, the processing device may a device which is separate from the writing instrument. In examples, the processing device is not integrated into the writing instrument. For instance, the processing device may be comprised in or may be a smart phone, a tablet, a personal computer, or provided as an independent device. In another configuration of the writing system according to **Fig. 2**, the processing device may be integrated into the writing instrument. In other words, one single device may be provided, for instance in the form of the writing instrument, which includes the processing device. Therefore, in the configuration of **Fig. 2**, the writing system may be the writing instrument which includes the processing device.

With further respect to **Fig. 1**, the processing device comprises a communications module for communicating with the writing instrument. The communications module may comprise a wired and/or a wireless communications module. Other ways or means for such communication with the writing instrument may be foreseen. The writing instrument may also comprise a communications module. The communications module of the writing instrument may comprise a wired and/or a wireless communications module. The communications modules are configured to establish a wired or wireless data connection. A wired connection via wired communications modules may, for instance be established when the processing device is integrated in the writing instrument. In some configurations a wired connection may also be provided when the processing device is a separate device or is integrated in a device separate from the writing instrument. Specifically, the communications modules are configured to establish a wired or wireless data connection to the respective other device, i.e. the processing device or the writing instrument. In examples, the one or both communications modules may be configured to establish a data connection to the internet and/or an external device, such as a smartphone. The term wired connection or wired communications module may also encompass systems which are not permanently wired. For instance, systems which may be releasable wired or connected.

Independently of the separate provision of the processing device or its integration into the writing instrument, the corresponding writing systems may be configured similarly.

The processing device is configured to carry out the computer-implemented method disclosed herein. The processing device of **Fig. 1** further comprises a database for storing and/or retrieving data and a processing subunit. Specifically, the processing device comprises means (e.g. one or more processors) for carrying out the computer-implemented method as disclosed herein. A user output interface is provided in the user interface of the processing device. In examples, for instance **Figs. 2** **or** **3**, the processing device may not comprise a user interface.

In these cases, the processing device may receive user input or provide user output via transferring it to or from a user interface from another device, such as the writing instrument and/or an external device, for instance, a smart phone. In examples, the processing device may comprise a user input interface and/or a user output interface and/or a user input interface.

The writing instrument further comprises a user interface and a digitization subunit. In some configurations, the digitization subunit may be provided in the processing device or in a separate device, for instance an external device. The user interface is configured to track a textual user input created by a user of the system. As depicted in **Fig. 1**, the user interface of the writing instrument comprises a user input interface. As schematically implied by the dashed box, the user interface of the writing instrument may also comprise a user output interface. For instance, in the examples of **Figs. 2** **and** **3****,** the user interface of the writing instrument comprises a user output interface.

To have a better distinction, the user interface of the writing instrument may be denominated first user interface. The user interface of the processing device may be denominated second user interface. Analogously, the user input interface of the first user interface may be denominated first user input interface. If applicable, the user output interface of the first user interface may be denominated first user output interface. The user output interface of the second user interface may be denominated second user output interface. If applicable, the user input interface of the second user interface may be denominated second user input interface.

The first user input interface is configured to track textual user input by capturing a textual creation of the user. Therefore, the first user input interface may comprise a capturing subsystem. The capturing subsystem may be configured to capture text created by the user in way known to the skilled person. In aspects, the text may be created by the user by writing with the hand and/or a pen and/or by dictating text. Accordingly, the first user input interface, specifically the capturing subsystem, may comprise one or more sensors. The one or more sensors may be configured to detect motion and/or force and/or sound. In aspects, the one or more sensors may comprise one or more of an accelerometer, a gyroscope, a magnetometer, an optical motion sensor, a position sensor, a microphone, a force sensor, a camera and/or a user-oriented sensor, specifically an eye tracking sensor. In aspects, user input interface, specifically the capturing subsystem, may comprise one or more of a keyboard, a virtual keyboard, a touchpad, a touch screen, a graphics tablet, and a camera. In some aspects, the writing instrument, specifically the first user input interface, may encompass speech recognition systems and/or gesture recognition systems . In some aspects, the writing instrument may not encompass speech recognition and/or gesture recognition.

In the example of **Figs. 2** **and** **3**, the first user input interface is realized by a capturing subsystem which comprises one or more sensors to track the writing movement of a user. Specifically, the writing movement of the user may be tracked in real-time. Real-time in the context of tracking the textual user creation can be understood as tracking the creation in the moment of creation.

In other configurations (not shown), the writing movement of a user may be tracked differently, e.g. by a camera. In configurations, a corresponding user input interface, specifically a capturing subunit, may be provided separately from the writing instrument, for instance in a mobile device.

The digitization subunit is configured to convert the tracked textual user input into a digitized textual representation. The term "digitized textual representation" may be understood as textual data, which is machine-readable, specifically computer-readable. In examples, "digitized textual representation" is treated with optical character recognition. The digitization subunit may be configured to convert the textual user input into a digitized textual representation in real-time. Real-time in this meaning can be understood as converting the textual user input as soon the textual user input is tracked. This may depend on the speed and amount of user input, for instance on the speed of writing and the number of words written. For instance, the textual user input may be converted into a digitized textual representation on a letter-basis, a word-basis, a phrase-basis, a sub-sentence-basis, a sentence-basis, or a multisentence-basis, for instance a paragraph-basis. This may also be performed in real-time. For instance, textual user input which is converted into a digitized textual representation on a letter-basis in real-time, may be converted as soon as the letter is written and/or tracked. Just to give another example, textual user input which is converted into a digitized textual representation on a sentence-basis in real-time, may be converted as soon as the sentence is written and/or tracked. The digitized textual representation may be transferred to the processing device via the communications modules. When transferred to the processing device, the digitized textual representation may be directly processed by the processing subunit and/or stored on the database.

As depicted in the examples of **Figs. 2** **and** **3****,** the writing instrument may be configured as a smart writing instrument, specifically a smart pen. A smart pen may be understood as a pen which has more dedicated functions than just writing, particularly additional functions which may involve electrical systems and/or computing systems. For instance, a smart pen can be understood as a pen which tracks the pen movement of a user, digitizes it and/or has a communications interface to transfer data. The smart pen may integratively comprise the means for tracking the textual user input and for converting it into a digitized textual representation. "Integratively" in this context may be understood as being housed in the writing instrument, for instance the smart pen. "Means" may specifically be understood as comprising a suited capturing subunit to track the textual user input (e.g. writing) and a suited digitization subunit to convert the textual user input into machine-readable, specifically computer-readable data. In some alternative configurations, means for tracking the textual user input and/or means for converting it into a digitized textual representation may be provided separately from the writing instrument, for instance as a separate device or integrated in a separate device, such as a smart phone.

In configurations, the writing instrument may be a marker, a pencil-type instrument, a stylus, a ballpoint pen, a fountain pen, a felt-tip pen, a brush, a pencil, or a digital pen. In an example, the writing instrument may comprise means for tracking the textual user input and/or means for converting it into a digitized textual representation. "Means" may specifically be understood as comprising a suited capturing subunit to track the textual user input (e.g. writing) and a suited digitization subunit to convert the textual user input into machine-readable, specifically computer-readable data.

As already mentioned, the writing system comprises a user output interface. In the illustration of **Fig. 1**, the processing device comprises the user output interface. For instance, in the examples of **Figs. 2** **and** **3****,** the user interface of the writing instrument comprises a user output interface. Analogously, to the above explanations, this user output interface may be denominated "first user output interface". The user output interface is configured to provide user output visually and/or audibly. In the example of **Figs. 2** **and** **3****,** the first user output interface comprises a speaker and is configured to provide user output audibly. In aspects, the user output interface may comprise one or more of a speaker, a display, a vibration generator, and a projector. The term "user output" may be understood as output from the writing system to be received by the user. For instance, user output may comprise a creativity enhancing measure or an inquiry about user preferences, settings and/or a desired type of intervention, for example, a type of creativity enhancing measure such as boost mode and/or text mode. In examples, the user output interface may be configured to output one or more of a digitized textual representation, one or more creativity stimulating activities and/or their predetermined effectiveness and/or their ranking, the rephrased digitized textual representation, the minimum creativity threshold level and/or the predetermined scale.

In other configurations, a user output interface may be provided additionally or alternatively in the processing device and/or in an external device, such as a smartphone, an external speaker, or an external display. In such configurations, the writing system or writing instrument may transfer user output data, for instance, a creativity enhancing measure to the external device or the processing device via the communications module, specifically via the wireless communications module.

The user output interface may be provided in one of the writing instrument or the processing device. In examples, the writing system may comprise two user output interfaces, for instance a first user output interface and a second user output interface. In some aspects, the first user output interface may be provided in the writing instrument. The second user output interface may be provided in the processing device. In some configurations, first and second user output interfaces may be provided in one of the writing instrument or the processing device. In some examples, a user output regarding the settings may be provided via the second user output interface. A user output regarding the creativity enhancing measures may be provided via the first user output interface. In some configurations depending on the type of creativity enhancing measure, such as boost mode and/or text mode, and/or depending on the selected settings of a user, user output may be provided in one or both of the first and/or second user output interfaces. For instance, a warning tone proposing the user to make a pause may be provided via the first user output interface, for instance a speaker, in the writing instrument. For instance, a boost proposal such as a creativity stimulating exercise, and/or a text proposal may be provided via the second user output interface, for instance a display, in the processing device.. The "proposal" is to be understood as being only an information or suggestion to the user. The proposal does not directly intervain with the text written or change it in any way.

The user has the choice. Only when the user decides so, the written text is replaced by the proposal. The user may also adapt, i.e. edit, the written text and/or the proposal.

Analogously, the user input interface may be provided in one of the writing instrument or the processing device. In examples, the writing system may comprise two user input interfaces, for instance a first user input interface and a second user input interface. In some aspects, the first user input interface may be provided in the writing instrument. The second user input interface may be provided in the processing device. In some configurations, first and second user input interfaces may be provided in one of the writing instrument or the processing device. In examples, the first user input interface may comprise the capturing subunit to track textual user input and the second user input interface may comprise one or more buttons and/or a touch display to receive user input on user preferences, for instance settings, threshold, intervention type. In general, the writing system comprises a user input interface which is configured to receive instructions from a user on settings, e.g. minimum creativity level threshold, predetermined scale, intervention mode (for instance, boost mode and/or text mode), editing of the (rephrased) digitized textual representation, predetermined duration, et cetera. In some configurations, the writing system may only receive data regarding the latter instructions from an external user input interface which may for instance, be provided in a smartphone.

In aspects, one or more user interfaces may be provided for each of the processing device and the writing instrument. In aspects, one or more common user interfaces may be provided for both the processing device and the writing instrument. A common user interface means that the processing device and the writing instrument may share a mutual user interface. A common user interface may comprise a user input interface and/or a user output interface. In some configurations, a user interface may be suited to provide for both user input and user output, for instance a touch display.

In general, the processing device may be understood, for instance, as a data processing device or a computing device. The processing device may generally comprise means known to the skilled person to carry out the computer-implemented method disclosed herein. For instance, the processing device comprises one or more processors and a data storage and/or access to a database for storing, for example the settings such as text mode, boost mode, minimum creativity level threshold.

The processing subunit is configured to run one or more algorithms of the computer-implemented method disclosed herein. With further respect to **Fig. 1**, the processing subunit comprises an intervention choice unit, a creativity determination unit and a creativity enhancing unit. In examples, the intervention choice unit, the creativity determination unit, and the creativity enhancing unit may be provided in one physical unit or in two or more physically separate units. For instance, the intervention choice unit, the creativity determination unit, and the creativity enhancing unit may be understood as software modules and provided in one physical unit.

The intervention choice unit may be configured to receive and process user preferences on intervention and/or settings of creativity enhancing measure via the user interface. Specifically, user preferences may be received via a user input interface. The user input interface for receiving the user preferences may be the same user input interface, for instance, the above described user input interface of the writing instrument, as that for tracking the textual user input. The user input interface may for instance be or comprise a touch screen display. In other examples, specifically when the textual user input is tracked via a smart pen, a user input interface may be provided separately from the user input interface for tracking the textual user input. For instance, the separate user input interface may be either provided in the separate processing device or in the writing instrument, specifically independently of the processing device being separate or integrated into the writing instrument. User preferences may be understood as settings regarding the computer-implemented method which are selectable/adaptable by a user. The user preferences regarding the computer-implemented creativity enhancement method may comprise one or more of general settings (for instance, updates or personalisation settings), intervention mode (for instance boost mode and/or text mode and/or warning), creativity enhancing measures (for instance, list of creativity enhancing measures and/or predetermined effectiveness,) predetermined duration, minimum creativity level threshold, scale of creativity levels and/or type of user output provision (e.g. visually and/or audibly).

The creativity determination unit may be configured to run a natural language processing algorithm and/or a semantic distance algorithm which will be described in more detail below.

The creativity enhancing unit may be configured to run a generative algorithm which, for instance may be configured to create a rephrased digitized textual representation which has a higher creativity level than the digitized textual representation representing the textual user input.

The processing subunit may be configured to convert the creativity enhancing measure into one or more formats which can be outputted visually and/or audibly via the user interface. In some configurations the user output interface may comprises means (e.g. one or more processors) which are configured to convert the creativity enhancing measure into one or more formats which can be outputted visually and/or audibly to a user. In examples, the processing subunit and/or the means (e.g. one or more processors) convert a text proposal and/or a boost proposal to speech data, for instance in a natural language such as English, and communicate it to the user verbally via the user interface, for example a speaker. In examples, the processing subunit or the means (e.g. one or more processors) convert text a proposal and/or a boost proposal to natural text data, for instance in a natural language such as English, and communicates it to the user via a user interface, e.g. a display or a projector.

The database may store one or more of the digitized textual representation, the creativity stimulating activities and/or their predetermined effectiveness and/or their ranking, the rephrased digitized textual representation, the minimum creativity threshold level and/or the predetermined scale. In examples, the database may be a storage memory or a cloud-based storage. In examples one or more algorithms such as the natural language processing algorithm, the semantic distance algorithm and/or the generative algorithm may be stored on the database. In examples, the database may comprise creative writing course material in the form of textual data, for instance rephrasing data.

The present disclosure further relates to a computer program. The computer program comprises instructions. When the program is executed by the processing device as described above, the instructions cause the processing device to carry out the method steps of the computer-implemented method for providing a creativity enhancing measure to a user to enhance a creativity level of a textual user input created by the user as described further below. The present disclosure further relates to a computer-readable storage medium having stored thereon the computer program.

The writing system of **Figs. 1 to 3**, specifically the processing unit is configured to carry out the computer-implemented method as disclosed herein.

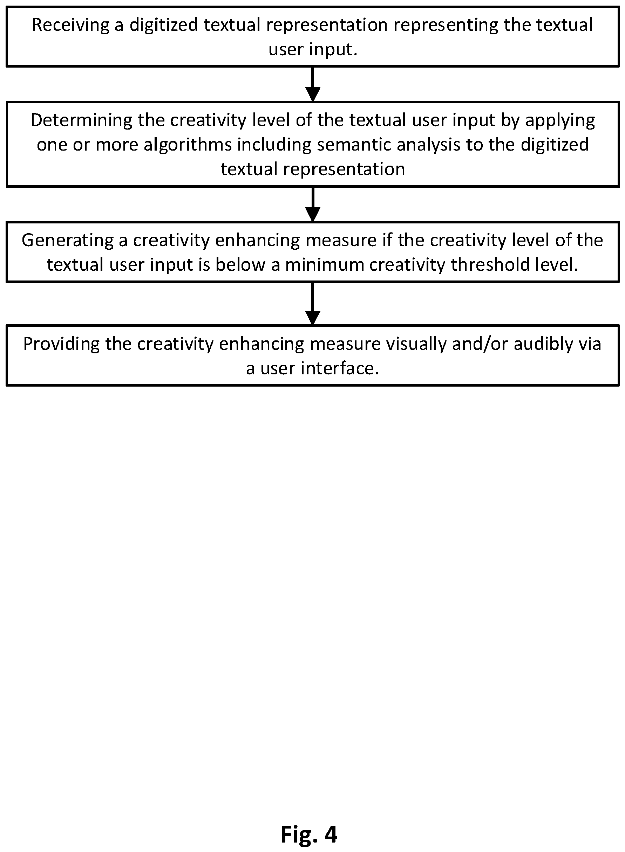

**Fig. 4** depicts exemplary basic method steps of the computer-implemented method for providing a creativity enhancing measure to a user to enhance a creativity level of a textual user input created by the user is provided. In a first step, a digitized textual representation representing the textual user input is received. Then, a creativity level of the textual user input is determined by applying one or more algorithms including semantic analysis to the digitized textual representation. In a next step, if the creativity level of the textual user input is below a minimum creativity threshold level, a creativity enhancing measure is generated. Via a user interface the creativity enhancing measure is provided to a user. As mentioned above, textual user input may encompass one or more letters, one or more words, one or more phrases and/or one or more sentences. Specifically, the textual user input may be created by the user using the writing instrument. The term "textual user input" may encompass handwritten text, typed text, dictated text or text otherwise created by a user, for instance by gestures. A user may be referred to as a "creative writer", for instance someone who aims at creating a creative text, such as authors, script writers, marketing scripts writers, website content writers, video game creators, journalists, travel blogger, editor only to name a few. By applying semantic analysis to the digitized textual representation an automated approach for creativity determination can be provided without the requirement of an expert jury which is need for CAT. Furthermore, the semantic analysis is a more objective approach than CAT, possibly leading to more reliable results. In addition, texts can be completed faster and more efficiently while ensuring a high creativity level, i.e. above the minimum creativity level threshold, thereby enabling increasing the monetary output of text creation. Particularly, when the method is performed in real-time efficiency advantages may be provided. Real-time in this context can be understood that the digitized textual representation is received as soon as it is created by a user and, if applicable as soon as it is subsequently transformed in a digital version.

In examples, the digitized textual representation may be received by retrieving it from a database. Specifically, new digitized textual representation may be retrieved as soon as it is stored on the database.

Determining the creativity level comprises applying a natural language processing algorithm. The natural language processing algorithm may be configured to analyse the digitized textual representation. The natural language processing algorithm may be configured to extract context information of the textual user input. In aspects, context information may comprise for instance a context link. For instance, a context link may include a specific theme or concept under which the analysed text (i.e. textual user input) or sub-portion of the analysed text can be subsumed. In other words, a context analysis is applied to the digitized textual representation.

The digitized textual representation may be analysed on word, phrase, sentence and/or concept level. In detail, context information may be extracted on one or more of the respective levels. Specifically, the analysis may be performed on a sentence level. Context information may be extracted on a word basis. By extracting context information on a word basis the semantic relatedness of the words within one sentence may be correlated. Based on the semantic relatedness the creativity level of the analysed sentence may be subsequently determined. The basis level of the analysis, for instance word basis or sentence basis, may depend on the extent of textual user input and/or may be determined by a user. In some configurations, textual user input may be analyzed based on n-grams, noun phrases, themes or facets or a sub-sentence element. N-grams may be understood as combinations of one or more words that represent entities, phrases, concepts, and themes that may appear in the textual user input.

Determining the creativity level comprises applying a semantic distance algorithm. Performing semantic analyses may comprise or may mean applying the semantic distance algorithm. The semantic distance algorithm may be configured to quantify a semantic relatedness of the textual user input based on the context information. In some aspects, semantic distances between textual elements, e.g. words, phrases and/or sentences within the textual user input may be compared with each other. In aspects, additionally or alternatively, semantic distances between textual elements, e.g. words, phrases and/or sentences within the textual user input may compared with textual elements, e.g. words, phrases and/or sentences of previously received and/or stored textual user input. For instance, semantic relatedness is quantified between words (or phrase or sentences etc.) in a larger corpora of text such as the textual user input or several accumulated textual user inputs. In examples, the semantic relatedness of the textual user input is quantified with respect to textual user inputs previously received and/or already stored in the database. In examples, the semantic relatedness may be quantified by assigning one or more similarity values to the digitized textual representation of the textual user input. Additionally or alternatively, the semantic relatedness may be quantified by assigning one or more similarity values to the digitized textual representation of one or more sub-portions of the textual user-input. In examples, the semantic relatedness may be quantified by assigning one or more similarity values to the digitized textual representation of several textual user inputs. In examples, the similarity value may be higher, the closer the context information is and vice versa. In more detail, the semantically closer the context of two compared text portions, for instance one or more words, one or more phrases or one or more sentences, et cetera, within the textual user input, the higher is the similarity value. Semantic distance algorithms and approaches of quantifying semantic relatedness are described for instance *by* Landauer, Foltz, & Laham, 1998 (latent semantic analysis*)* or *by* Beaty and Johnson, 2020 (semDIS tool*).*

The creativity level of the textual user input is determined by the semantic distance algorithm by assigning a scoring to the digitized textual representation based on the quantified semantic relatedness. A scoring may be assigned to the digitized textual representation which is inverse to the quantified semantic relatedness. In examples, the creativity level may be linearly inverse to the quantified semantic relatedness or may be multiplicated by a certain factor. In aspects, the creativity level may be scored in a predetermined scale. In some aspects, the predetermined scale may be pre-selected by the user via a user interface. In aspects, the predetermined scale may be a default scale. In some aspects, the predetermined scale, for instance the default scale, may be adaptable by a user. In some aspects, the predetermined scale and/or default scale may be retrieved from a database. The scale, for instance predetermined scale or default scale, may be for instance a scale from one to five. In this example scale, five may be very creative and one may be less or not creative. The quantified semantic relatedness may be transformed inversely by a specific factor in order to result in a creativity level between one and five. In other words, the creativity level scoring is assigned positively related to the semantic distance. That means, the larger the semantic distance or distances are within the textual user input, the higher is the creativity level. This approach may be based on the idea that creative thinking requires making connections between seemingly "remote" concepts, id est, semantic distant concepts or alternatively described making connections between semantic less related concepts.

The minimum creativity threshold level may be pre-selected by a user via a user interface. In examples, the minimum creativity threshold level may be predetermined by default. In examples, the minimum creativity threshold level may also be adaptively refined by a user during writing.

Generating the creativity enhancing measure may comprise one or both of generating a text proposal and a boost proposal. A text proposal may be understood as a proposal of an alternative text to the textual user input. In other words, a text proposal may be understood as an alternative text for replacing the textual user input. A boost proposal may be understood as a measure which is suited to boost the creativity of a user. A text proposal may be generated if a text proposal mode is activated. A boost proposal may be generated if a boost proposal mode is activated. In some examples, a text proposal and a boost proposal may be generated if both a text proposal mode and a boost proposal mode are activated. In other words, a text proposal is generated if a text proposal mode is activated and if the creativity level of the textual user input is below the minimum creativity threshold level. Analogously, a boost proposal is generated if a boost proposal mode is activated and if the creativity level of the textual user input is below the minimum creativity threshold level. In some examples, when a token representing an activated text proposal mode is stored in a database, a text proposal may be generated. In some examples, when a token representing an activated boost proposal mode is stored in a database, a boost proposal may be generated. In examples a text proposal mode and/or a boost proposal mode may be activated by a user. For instance, a text proposal and/or a boost proposal may be generated based on a pre-selection by a user via a user interface. In some examples, a text proposal mode may be activated if a user makes a corresponding pre-selection. In some examples, a boost proposal mode may be activated if a user makes a corresponding pre-selection.

Generating a text proposal includes applying a generative algorithm configured to analyse the digitized textual representation. The generative algorithm may be further configured to create a rephrased digitized textual representation which has a higher creativity level than the digitized textual representation representing the textual user input. In some aspects, the generative algorithm may include Artificial Intelligence technology. In aspects, creating the rephrased digitized textual representation may involve applying a text-based artificial intelligence algorithm and/or retrieving rephrasing data stored on a database. Rephrasing data may be based on creative writing course material and/or may be previously created by a user or a generative algorithm. In examples, creative writing course material may be stored on the database and retrieved from it. In examples, rephrasing data may be stored on the database. In examples, storing the rephrasing data and/or writing course material may be cloud-based, may be stored in a database of the processing device or in writing device. In examples, the generative algorithm and/or the text-based artificial intelligence algorithm may be based on or similar to Generative Pre-trained Transformer 2 (GPT 2) or Generative Pre-trained Transformer 3 (GPT 3) of *"Open AI".*

Creating the rephrased digitized textual representation may involve applying a semantic distance algorithm and a natural language processing algorithm. For instance, the semantic distance algorithm and/or the natural language processing algorithm may be applied to determine a suited rephrased digitized textual representation which has a higher creativity level than the analysed digitized textual representation according to the tracked textual user input. For example, the semantic distance algorithm and/or the natural language processing algorithm may be applied to determine a suited rephrased digitized textual representation which comprises text elements, for instance words, phrases, or sentences, with higher semantic distances evaluated based on context information of the text elements. The rephrased digitized textual representation represents a proposal for a replacement of the textual user input already created by a user. In examples, the rephrased digitized textual representation may be stored on a database. In examples, the digitized textual representation representing the textual user input is also stored on the database. In examples, the digitized textual representation and the original digitized textual representation, id est the digitized textual representation representing the textual user input, may be outputted to the user via the user interface. For instance, the user may evaluate and/or edit the digitized textual representation and/or the original digitized textual representation via the user interface.

Generating a boost proposal includes choosing a creativity stimulating activity from a list of creativity stimulating activities stored on the database or in a cloud-based storage. In examples, the list of creativity stimulating activities includes one or more of a writing brake proposal and/or a creativity stimulating exercise. In aspects, the list of creativity stimulating activities may be adapted by the user and/or updated. A creativity stimulating activity is an activity which may be suited to stimulate creativity of a user. In other words, a creativity stimulating activity is an activity which may be suited to "boost" the creativity of a user. Just to name a few, the creativity stimulating exercises may include one or more of the following exercises: "complete the incomplete figure test", "complete the picture", "look away from what you are creating", "Drawing/Writing upside down", "concentrate on quantity", "make treasure out of trash" or "Alternatives Use Test" (for more information, see, e.g. https://www.artworkarchive.com/blog/7-fun-exercises-to-quickly-improve-creative-thinking).

Proposing a writing brake may include proposing a writing brake of a certain time interval. For instance a writing brake of 60 seconds, 5 minutes 1 hour or 1 day up to 1 week or anything between 30 seconds and 1 week may be proposed. In examples, a timer with the respective writing brake time interval may be set. A notice may be provided, for instance outputted visually and/or audibly via the user interface to the user, when the timer is elapsed. Proposing a writing brake, specifically a time interval, may be coupled to a duration of low creativity level textual user input. A duration in this meaning may be understood as a time period of textual user inputs which have creativity levels below the minimum creativity level threshold and/or of textual user inputs which have creativity levels below the minimum creativity level threshold. Specifically, a longer writing brake of e.g. more than 5 minutes, specifically at least 30 minutes or at least 1 hour may be proposed if several of the previously tracked textual user inputs exhibited a low creativity level. For instance, if a majority, such as at least 50% of the last tracked five, ten or twenty textual user inputs exhibited a creativity level below the minimum creativity level threshold. A writing brake may be understood as a break from proceeding with the writing of the text, for instance creative text such as a novel, intended to be completed by the user. A writing brake may not mean that a user may not continue writing or creating something else than the text intended to be completed such as creativity stimulating exercises.

The creativity stimulating activity may be chosen randomly from the list of creativity stimulating activities. In some aspects, the creativity stimulating activity may be chosen from the list of creativity stimulating activities based on one or more user preferences.

In some examples, the creativity stimulating activity may be chosen from the list of creativity stimulating activities based on a predetermined effectiveness in leading to a higher subsequent creativity level of textual user input. In examples, the predetermined effectiveness may be identified by tracking the creativity levels of the textual user inputs which are created after a respective creativity stimulating activity is chosen. The chosen creativity stimulating activities may be ranked in dependence of the subsequently tracked creativity level of textual user input. This ranking may represent the predetermined effectiveness. Specifically, creativity stimulating activities may be ranked based on a high predetermined effectiveness. In aspects, a default ranking and/or a default predetermined effectiveness of a creativity stimulating activity may be user, for instance stored on a database and/or downloaded from the internet. In some aspects, the default ranking and/or the default predetermined effectiveness may then be refined, for instance user-specifically and/or user-independently. In aspects, the ranking of stimulating activity effectiveness and/or the predetermined effectiveness of a creativity stimulating activity may be stored on a database. In aspects, the predetermined effectiveness may be identified user-specific. In some aspects, the predetermined effectiveness may be identified independently of specific user, for example over all users. In aspects, the creativity levels may be continuously tracked and/or stored on a database. In some aspects, the ranking of a chosen creativity stimulating activity may be continuously updated, for instance based on the continuous tracking of creativity levels. For instance, the ranking of a chosen creativity stimulating activity may be continuously updated by forming an average mean effectiveness for each creativity stimulating activity or by replacing a previous ranking, i.e. a predetermined effectiveness. Thereby each creativity stimulating activities can be correlated with the success of leading to a higher creativity. In examples, the predetermined effectiveness may be a default effectiveness, for instance provided ab initio and/or via an update, and/or an effectiveness adapted to one or more specific users. In some examples, a type of creativity enhancing measure may be pre-selected by a user via the user interface. For example, a user input regarding output type of the creativity enhancing measure may be received.

In some configurations, a creativity enhancing measure is only created and/or proposed if the creativity level is below the minimum creativity threshold level for a predetermined duration. The predetermined duration may be determined by a predetermined time period of textual user inputs which have creativity levels below the minimum creativity level threshold. In examples, the predetermined duration may be determined by a predetermined number of textual user inputs which have creativity levels below the minimum creativity level threshold. In some examples, the predetermined duration may be determined by a predetermined time period and by a predetermined number of textual user inputs which have creativity levels below the minimum creativity level threshold. The predetermined number of textual user inputs may be a predetermined number of words, phrases and/or sentences. Specifically, the predetermined number of textual user inputs may be a series of a predetermined number of low scoring sentences. In examples, the predetermined duration may be pre-selected by a user via a user interface. Specifically, a predetermined time period and/or a predetermined number of textual user inputs, for instance, a number of phrase and/or sentences, may be pre-selected by a user via a user interface. In some examples, the predetermined duration may be pre-selected by default. In some aspects, if the predetermined duration is pre-selected by default, the predetermined duration may be adaptable by a user.

In some configurations, the method further comprises providing a creativity warning to a user via the user interface. The creativity warning may be provided to the user upon determining that the creativity level of the textual user input is below the minimum creativity threshold level. In some examples, the creativity warning may include an inquiry about which type of creativity enhancing measure is desired by a user. In some aspects, a text proposal and/or a boost proposal may be generated based on a selection by a user via a user interface in reply to the creativity warning, for instance in reply to the inquiry.

In examples, the creativity enhancing measure may be provided to the user visually and/or audibly via a user interface. In some examples, the method may further comprise converting the creativity enhancing measure into one or more formats which can be outputted visually and/or audibly via the user interface. The creativity enhancing measure may be provided visually via a display or projector. The creativity enhancing measure may be provided audibly via a speaker in the format of a specific sound or via an announcement in a natural language. Alternatively or additionally, a vibrational or other user output may be given to indicate a specific creativity enhancing measure. In examples, the type of creativity enhancing measure may be selected by a user. In other words, the method may include receiving a user input regarding output type of creativity enhancing measure.

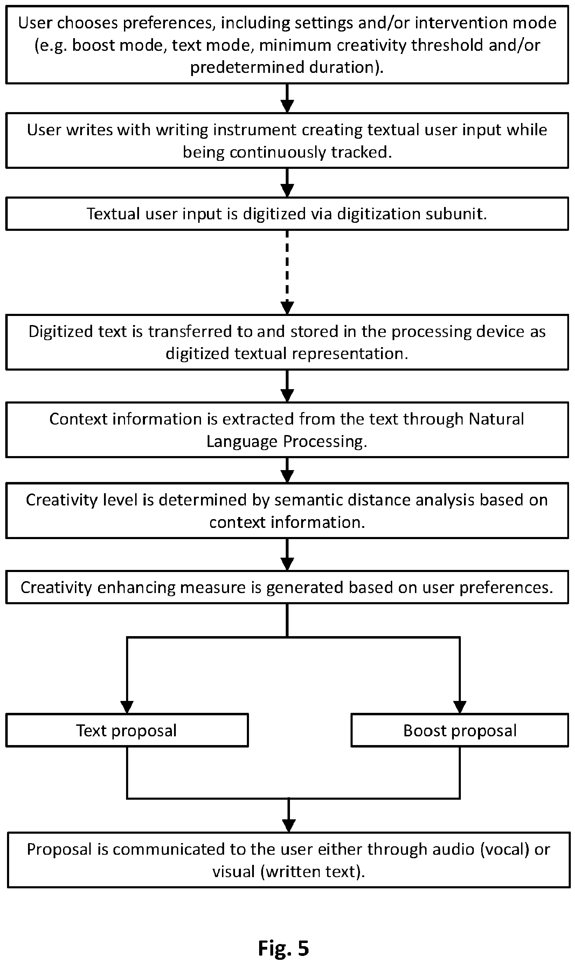

**Fig. 5** depicts an exemplary configuration of the computer-implemented method showing the basic principles of an example process flow. User chooses preferences, including settings and/or intervention mode (e.g. boost mode, text mode, minimum creativity threshold and/or predetermined duration). User writes with writing instrument creating textual user input while being continuously tracked. Textual user input is digitized via digitization subunit. Digitized text is transferred to and stored in the processing device as digitized textual representation. Context information is extracted from the text through Natural Language Processing. Creativity level is determined by semantic distance analysis based on context information. Creativity enhancing measure is generated based on user preferences. In examples, either one or both of a text proposal and a boost proposal is generated. Proposal is communicated to the user either through audio (vocal) or visual (written text).

It should be understood that the present disclosure can also (alternatively) be defined in accordance with the following configurations:
1. A computer-implemented method for providing a creativity enhancing measure to a user to enhance a creativity level of a textual user input created by the user, the method comprising:
   - Receiving a digitized textual representation representing the textual user input,
   - Determining a creativity level of the textual user input by applying one or more algorithms including semantic analysis to the digitized textual representation,
   - Generating a creativity enhancing measure if the creativity level of the textual user input is below a minimum creativity threshold level.
2. The method of configuration 1 being performed in real-time.
3. The method of any one of the preceding configurations, wherein determining the creativity level comprises applying a natural language processing algorithm configured to analyse the digitized textual representation and to extract context information of the textual user input.
4. The method of configuration 3, wherein the digitized textual representation is analysed on word, phrase, sentence and/or concept level, thus extracting context information on one or more of the respective creativity levels.
5. The method of any one of configurations 3 or 4, wherein determining the creativity level comprises applying a semantic distance algorithm configured to quantify a semantic relatedness of the textual user input based on the extracted context information.
6. The method of any one of configuration 5, wherein the semantic relatedness is quantified by assigning one or more similarity values to the digitized textual representation of the textual user input or one or more sub-portions of the textual user-input.
7. The method of any one of configuration 6, wherein the similarity value is higher, the closer the context information is and vice versa.
8. The method of any one of configurations 5 to 7, wherein the creativity level of the textual user input is determined by the semantic distance algorithm by assigning a scoring to the digitized textual representation which is inverse to the quantified semantic relatedness.
9. The method of configuration 8, wherein the creativity level is scored in a predetermined scale.
10. The method of configuration 9, wherein the predetermined scale is pre-selected by the user via a user interface.
11. The method of any one of the preceding configurations, wherein the minimum creativity threshold level is pre-selected by a user via a user interface.
12. The method of any one of the preceding configurations, wherein generating the creativity enhancing measure comprises generating a text proposal and/or generating a boost proposal.
13. The method of configuration 12, wherein generating a text proposal includes applying a generative algorithm configured to analyse the digitized textual representation and to create a rephrased digitized textual representation which has a higher creativity level than the digitized textual representation representing the textual user input.
14. The method of configuration 13, wherein creating the rephrased digitized textual representation involves applying a semantic distance algorithm and a natural language processing algorithm.
15. The method of any one of configurations 13 or 14, wherein creating the rephrased digitized textual representation involves applying a text-based artificial intelligence algorithm and/or retrieving rephrasing data stored on a database.
16. The method of any one of configurations 13 to 15, wherein the rephrased digitized textual representation is stored on a database.
17. The method of any one of configurations 12 to 16, wherein generating a boost proposal includes choosing a creativity stimulating activity from a list of creativity stimulating activities stored on a database.
18. The method of configuration 17, wherein the creativity stimulating activity is chosen randomly from the list of creativity stimulating activities.
19. The method of configuration 17, wherein the creativity stimulating activity is chosen from the list of creativity stimulating activities based on a predetermined effectiveness in leading to a higher subsequent creativity level of textual user input.
20. The method of configuration 19, wherein the predetermined effectiveness is identified by tracking the creativity levels of the textual user inputs which are created after a respective creativity stimulating activity is chosen, and by ranking the chosen creativity stimulating activities in dependence of the subsequently tracked creativity level of textual user input.
21. The method of configuration 19, wherein the creativity levels are continuously tracked and wherein the ranking of a chosen creativity stimulating activity is continuously updated.
22. The method of any one of configurations 12 to 21, wherein a text proposal is generated if a text proposal mode is activated.
23. The method of any one of configurations 12 to 22, wherein a boost proposal is generated if a boost proposal mode is activated.
24. The method of any one of the preceding configurations, wherein a type of creativity enhancing measure is pre-selected by a user via a user interface.
25. The method of any one of configurations 12 to 24, wherein a text proposal and/or a boost proposal is generated based on a pre-selection by a user via a user interface.
26. The method of any one of the preceding configurations, wherein a creativity enhancing measure is only created if the creativity level is below the minimum creativity threshold level for a predetermined duration.
27. The method of configuration 26, wherein the predetermined duration is determined by a predetermined time period and/or by a predetermined number of textual user inputs which have creativity levels below the minimum creativity level threshold.
28. The method of any of configurations 26 or 27, wherein the predetermined duration is pre-selected by a user via a user interface.
29. The method of any one of the preceding configurations, wherein the method further comprises providing a creativity warning to a user via a user interface upon determining that the creativity level of the textual user input is below the minimum creativity threshold level.
30. The method of configuration 29, wherein the creativity warning includes an inquiry about which type of creativity enhancing measure is desired by a user.
31. The method of any one of configurations 29 or 30, if at least dependent on configuration 12, wherein a text proposal and/or a boost proposal is generated based on a selection by a user via a user interface in reply to the creativity warning.
32. The method of any one of the preceding configurations, wherein the digitized textual representation is received by retrieving it from a database.
33. The method of any one of the preceding configurations, wherein the digitized textual representation is received by converting it from textual user input received via a user interface.
34. The method of any one of the preceding configurations, wherein the method further comprises tracking the textual user input created by a user via a user interface.
35. The method of configuration 34, wherein the method further comprises generating a digital representation of the tracked textual user input, thus the textual digitized textual representation.
36. The method of any one of the preceding configurations, wherein the method further comprises providing the creativity enhancing measure visually and/or audibly via a user interface.
37. The method of configuration 36, wherein the method further comprises converting the creativity enhancing measure into one or more formats which can be outputted visually and/or audibly via the user interface.
38. A processing device for carrying out the method of any one of the proceeding configurations, comprising:
   a user interface or a communications module for communicating with a user interface of a writing instrument to receive input from a user and/or to provide output to a user.
39. The processing device of configuration 38, wherein the communications module for communicating with the user interface of the writing instrument comprises a wired and/or wireless communications module.
40. The processing device of any one of configurations 38 or 39, further comprising:
   - a database, and
   - a processing subunit configured to run one or more algorithms.
41. The processing device of configuration 40, wherein the database stores one or more of the digitized textual representation, the creativity stimulating activities and/or their predetermined effectiveness and/or their ranking, the rephrased digitized textual representation, the minimum creativity threshold level and/or the predetermined scale.
42. The processing device of any one of configurations 40 or 41, wherein the processing subunit is configured to convert the creativity enhancing measure into one or more formats which can be outputted visually and/or audibly via the user interface.
43. A computer program comprising instructions which, when the program is executed by the processing device of any one of configurations 38 to 42, cause the processing device to carry out the method steps of any one of configurations 1 to 37.
44. A computer-readable storage medium having stored thereon the computer program of configuration 43.
45. A writing system for providing a creativity enhancing measure to a user to enhance a creativity level of a textual user input created by the user, wherein the writing system comprises:
   the processing device of any one of configurations 38 to 42, and
   a writing instrument comprising a user interface configured to track a textual user input created by a user of the system.
46. The writing system of configuration 45, wherein the user interface of the writing instrument comprises a user input interface configured to track the textual user input by capturing a textual creation of the user.
47. The writing system of configuration 46, wherein the user input interface comprises a capturing subsystem configured to capture text created by the user.
48. The writing system of configuration 47, wherein the text is created by the user by writing with the hand or a pen or by dictating text.
49. The writing system of any one of configurations 47 or 48, wherein the capturing subsystem comprises one or more sensors which are configured to detect motion and/or force and/or sound.
50. The writing system of any one of configurations 47 or 49, wherein the capturing subsystem comprises one or more of a keyboard, a virtual keyboard, a touchpad, a touch screen, a graphics tablet, and a camera.
51. The writing system of any one of configurations 45 to 50, further comprising a digitization subunit configured to convert the textual user input into a digitized textual representation.
52. The writing system of any one of configurations 45 to 51, wherein the writing instrument is a smart writing instrument, specifically a smart pen.
53. The writing system of configuration 52, wherein the smart pen integratively comprises capturing subunit for tracking the textual user input and a digitization subunit for converting it into a digitized textual representation.
54. The writing system of any one of configurations 45 to 53, further comprising a user output interface which is configured to provide user output visually and/or audibly.
55. The writing system of configuration 54, wherein the user output interface comprises one or more of a speaker, a display, a vibration generator, and a projector.
56. The writing system of any one of configurations 54 or 55, wherein the user output interface is provided in one of the writing instrument or the processing device.
57. The writing system of any one of configurations 54 or 55, comprising two user output interfaces are provided, a first user output interface being provided in the writing instrument and a second user output interface being provided in the processing device.
58. The writing system of any one of configurations 45 to 57, wherein the writing instrument comprises a wired and/or wireless communications module for communication with the processing device.
59. The writing system of any one of configurations 45 to 58, wherein the processing device is integrated into the writing instrument.
60. The writing system of any one of configurations 45 to 58, wherein the processing device is a separate device.
61. The writing system of any one of configurations 45 to 60, wherein one or more common user interfaces are provided for both the processing device and the writing instrument.
62. The writing system of any one of configurations 45 to 61, wherein one or more user interfaces are provided for each of the processing device and the writing instrument.
63. The writing system of any one of configurations 45 to 61, further comprising an intervention choice unit which is configured to receive and process user preferences on intervention and/or settings of creativity enhancing measure via the user interface.

## Claims

1. A computer-implemented method for providing a creativity enhancing measure to a user to enhance a creativity level of a textual user input created by the user, the method comprising:
- Receiving a digitized textual representation representing the textual user input,
- Determining a creativity level of the textual user input by applying one or more algorithms including semantic analysis to the digitized textual representation,
- Generating a creativity enhancing measure if the creativity level of the textual user input is below a minimum creativity threshold level.

2. The method of claim 1, wherein determining the creativity level comprises applying a natural language processing algorithm configured to analyse the digitized textual representation and to extract context information of the textual user input.

3. The method of claim 2, wherein determining the creativity level comprises applying a semantic distance algorithm configured to quantify a semantic relatedness of the textual user input based on the extracted context information.

4. The method of claim 3, wherein the creativity level of the textual user input is determined by the semantic distance algorithm by assigning a scoring to the digitized textual representation which is inverse to the quantified semantic relatedness.

5. The method of any one of the preceding claims, wherein generating the creativity enhancing measure comprises generating a text proposal and/or generating a boost proposal.

6. The method of claim 5, wherein generating a text proposal includes applying a generative algorithm configured to analyse the digitized textual representation and to create a rephrased digitized textual representation which has a higher creativity level than the digitized textual representation representing the textual user input.

7. The method of any one of claims 5 or 6, wherein generating a boost proposal includes choosing a creativity stimulating activity from a list of creativity stimulating activities stored on a database.

8. The method of claim 7, wherein the creativity stimulating activity is chosen from the list of creativity stimulating activities based on a predetermined effectiveness in leading to a higher subsequent creativity level of textual user input.

9. The method of any one of the preceding claims, wherein the method further comprises providing a creativity warning to a user via a user interface upon determining that the creativity level of the textual user input is below the minimum creativity threshold level.

10. The method of any one of the preceding claims, wherein a creativity enhancing measure is only created if the creativity level is below the minimum creativity threshold level for a predetermined duration.

11. A processing device for carrying out the method of any one of the proceeding claims, comprising:
a user interface or a communications module for communicating with a user interface of a writing instrument to receive input from a user and/or to provide output to a user.

12. The processing device of claim 11, further comprising:
- a database, and
- a processing subunit configured to run one or more algorithms.

13. A computer program comprising instructions which, when the program is executed by the processing device of any one of claims 11 or 12, cause the processing device to carry out the method steps of any one of claims 1 to 10.

14. A computer-readable storage medium having stored thereon the computer program of claim 13.

15. A writing system for providing a creativity enhancing measure to a user to enhance a creativity level of a textual user input created by the user, wherein the writing system comprises:
the processing device of any one of claims 11 or 12, and
a writing instrument comprising a user interface configured to track a textual user input created by a user of the system.
